# EUROPÄISCHE PATENTSCHRIFT

(11) **EP 1 948 698 B1**
(45) Veröffentlichungstag und Bekanntmachung des Hinweises auf die Patenterteilung: **04.03.2009**
(21) Anmeldenummer: 06807615.7
(22) Anmeldetag: 27.10.2006
(51) Int. Cl.: C08F 2/10

(54) **VERFAHREN ZUR HERSTELLUNG VON VINYLFORMAMID-EINHEITEN ENTHALTENDEN POLYMERPULVERN**
PROCESS FOR PRODUCTION OF POLYMER POWDERS CONTAINING VINYLFORMAMIDE UNITS
PROCEDE DE FABRICATION DE POUDRES POLYMERIQUES CONTENANT DES UNITES VINYLFORMAMIDE

(30) Priorität: 08.11.2005 DE 102005053559
(43) Veröffentlichungstag der Anmeldung: 30.07.2008
(73) Patentinhaber: BASF SE, 67056 Ludwigshafen (DE)
(72) Erfinder: LÖSCH, Dennis, 67122 Altrip (DE); SEIDL, Volker, 68199 Mannheim (DE); RÜBENACKER, Martin, 67122 Altrip (DE)
(86) Internationale Anmeldenummer: PCT/EP2006/067866
(87) Internationale Veröffentlichungsnummer: WO 2007/054442

(56) Entgegenhaltungen:
- DE-A1- 10 340 253
- US-A- 5 269 980
- US-A1- 2002 193 546

## Beschreibung

Die Erfindung betrifft ein Verfahren zur Herstellung von Vinylformamid-Einheiten enthaltenden Polymerpulvern durch radikalische Polymerisation einer wässrigen Lösung von N-Vinylformamid und gegebenenfalls anderen Monomeren und Trocknen der Polymeren.

Vinylformamid-Einheiten enthaltende Polymere sind bekannt. So werden beispielsweise in der EP-A 0 071 050 lineare basische Polymere beschrieben, die 90 bis 10 Mol-% Vinylamin-Einheiten und 10 bis 90 Mol-% Vinylformamid-Einheiten enthalten. Diese Polymeren werden durch Polymerisieren von N-Vinylformamid nach dem Verfahren der Lösungspolymerisation in Wasser, der umgekehrten Suspensionspolymerisation, der Wasser-in-Öl-Emulsionspolymerisation oder der Fällungspolymerisation und jeweils anschließende partielle Abspaltung von Formylgruppen aus den Polyvinylformamiden unter Bildung von Vinylamineinheiten hergestellt.

Ein Verfahren zur umgekehrten Suspensionspolymerisation von N-Vinylformamid und Hydrolyse von Poly-N-vinylformamiden mit einem Wassergehalt von 6 bis 90 Gew.-% zu pulverförmigen Produkten ist aus der DE-A 40 07 311 bekannt.

Aus der US 4,623,699 ist ein Verfahren zur Herstellung von Vinylamin-Einheiten enthaltenden Polymerpulvern durch Behandlung von pulverförmigen N-Vinylformamid enthaltenden Polymeren mit gasförmigen Halogenwasserstoffen bei Temperaturen bis zu 200°C bekannt.

Aus der US 4,769,427 ist ein kontinuierliches Verfahren zur Herstellung feinteiligen, gelförmigen, vernetzten Polymeren bekannt, wobei man eine Monomermischung, die auf 100 Gew.-Teile Acrylsäure, Methacrylsäure, die Salze dieser Säuren, Acrylamid, Methacrylamid oder N-Vinylpyrrolidon, gegebenenfalls bis zu 30 Gew.-Teile wasserlösliche Monomere wie N-Vinylformamid, bis zu 20 Gew.-Teile wasserunlösliche Monomere wie Acrylsäure- oder Methacrylsäureester und 0,01 bis 5 Gew.-Teilen eines Vernetzers wie Methylenbisacrylamid oder Trimethylolpropantriacrylat enthält, in einem Extruder polymerisiert.

Aus der EP-A 0 220 603 ist die Polymerisation von N-Vinylformamid gegebenenfalls zusammen mit mindestens einem anderen Monomeren in überkritischem Kohlendioxid bekannt.

Aus der US 5,269,980 ist ein Verfahren zur Herstellung von Polymerpartikeln durch Sprühpolymerisation bekannt, wobei monodisperse Tropfen einer Monomerlösung in einem heißen Gasstrom polymerisiert und getrocknet werden. Als geeignete Monomere werden Styrol, Methylmethacrylat, Acrylsäure, Vinylacetat, Divinylbenzol oder Mischungen der Monomeren genannt.

Aus der älteren DE-Anmeldung 10 2005 044 035 ist ein Verfahren zum Vertropfen von Flüssigkeiten mittels einer Vertropferplatte bekannt, deren Unterseite zumindest teilweise gegenüber der Flüssigkeit, die vertropft werden soll, einen Kontaktwinkel von mindestens 60° aufweist. Eine derartige Vertropferplatte wird beispielsweise in einem Polymerisationsverfahren zur Herstellung wasserabsorbierender Polymerpartikel verwendet.

Die oben beschriebenen Verfahren zur Herstellung von pulverförmigen N-Vinylformamid-Einheiten enthaltenden Polymeren sind relativ aufwendig. Bei der Herstellung von pulverförmigen Produkten aus wässrigen Lösungen von Poly-N-vinylformamiden durch Verdampfen des Wassers hat man das Problem, das zunächst hochviskose wässrige Lösungen entstehen, die nur schwer handhabbar sind. Bei der Sprühtrocknung solcher Lösungen bilden sich Fäden aus, so dass die getrockneten Produkte zunächst gemahlen und dann gesiebt werden müssen.

Die bisher einfachste Methode zur Gewinnung von N-Vinylformamid-Einheiten enthaltenden Polymerpulvern besteht darin, dass man beispielsweise durch umgekehrte Suspensionspolymerisation hergestellte Polymersuspensionen oder Wasser-in-Öl-Polymerdispersionen von Poly-N-Vinylformamid trocknet. Ebenso wie bei der Sprühtrocknung von wässrigen Polymerlösungen so lagern sich auch beim Trocknen von Polymer-Emulsionen bzw. Polymer-Dispersionen die bei der Polymerisation jeweils verwendeten Hilfsmittel wie Schutzkolloide und/oder Tenside, auf den Polymerpulvern ab. Dadurch werden aber die Eigenschaften der Polymerpulver in unerwünschter Wiese verändert.

Der Erfindung liegt die Aufgabe zugrunde, ein weiteres Verfahren zur Herstellung von Vinylformamid-Einheiten enthaltenden Polymerpulvern zur Verfügung zu stellen.

Die Aufgabe wird erfindungsgemäß gelöst mit einem Verfahren zur Herstellung von Vinylformamid-Einheiten enthaltenden Polymerpulvern durch radikalische Polymerisation einer wässrigen Lösung von N-Vinylformamid und gegebenenfalls anderen Monomeren und Trocknen der Polymeren, wenn man eine wässrige Monomerlösung, die N-Vinylformamid und mindestens einen Polymerisationsinitiator enthält, am Kopf eines beheizbaren, turmförmigen Reaktors zu einem Aerosol versprüht oder vertropft, dann das Aerosol bzw. die Tröpfchen in einer Inertgasatmosphäre zu einem feinteiligen Feststoff polymerisiert und das feinteilige Polymere aus dem Reaktor austrägt.

Unter einem turmförmigen Reaktor sollen Reaktoren mit einer beliebigen Grundfläche verstanden werden, bei denen das Verhältnis von Länge zu Durchmesser mindestens 3 : 1, vorzugsweise mindestens als 5 : 1 beträgt. Meistens liegt es in dem Bereich von 3:1 bis 7:1. Die Grundfläche des Reaktors kann beispielsweise kreisförmig, quadratisch, rechteckig oder achteckig sein. Der Reaktor ist vorzugsweise beheizbar und weist im oberen Abschnitt, vorzugsweise am Kopf, eine herkömmliche Sprühvorrichtung oder eine Vertropferplatte für die wässrige Monomerlösung auf. Dem Reaktor wird beispielsweise im oberen Drittel ein Inertgasstrom zugeführt. Der Inertgasstrom hat vorzugsweise eine Temperatur von mindestens 100°C, insbesondere eine Temperatur von 110 bis 300°C. Die im Reaktor aus der wässrigen Monomerlösung gebildeten Tröpfchen werden freifallend zu einem Pulver polymerisiert und dabei zumindest teilweise getrocknet. Das Pulver wird am Fuß des Reaktors ausgetragen. Es kann gegebenenfalls noch in einer Wirbelschicht nachbehandelt werden, um beispielsweise eine Teilchenvergrößerung durch Agglomeration oder eine Nachpolymerisation vorzunehmen. Bei einem sehr großen Verhältnis von Länge zu Durchmesser des Reaktors kann die Wirbelschicht auch in den Reaktor integriert sein. Falls das Reaktionsprodukt eine Wirbelschicht durchläuft, so befindet sich die Wirbelschicht vorzugsweise in einem separaten beheizbaren Wirbelschichtreaktor. Als Wirbelgut dient vorzugsweise pulverförmiges Poly-N-vinylformamid. Die Temperatur in der Wirbelschicht entspricht meistens der Temperatur, bei der die Polymerisation im turmförmigen Reaktor erfolgt. Wenn eine Nachpolymerisation vorgenommen werden soll, kann sie - je nach verwendetem Initiator - auch unterhalb der Polymerisationstemperatur oder darüber liegen.

Als Inertgas kommt bevorzugt Stickstoff in Betracht. Man kann jedoch auch ein Edelgas als Inertgas verwenden. Als Inertgas können prinzipiell alle Gase verwendet werden, die unter den Reaktionsbedingungen nicht mit den Bestandteilen der Monomerlösung reagieren. Das Inertgas wird vorzugsweise im oberen Abschnitt des Reaktors in die Reaktionszone eingebracht. Es kann im Gleichstrom oder im Gegenstrom zu den frei fallenden Tröpfchen der Monomerlösung durch die Reaktionszone geführt werden. Vorzugsweise wird das Trägergas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1 %.

Die Gasgeschwindigkeit wird vorzugsweise so eingestellt, dass die Strömung im Reaktor gerichtet ist, beispielsweise liegen keine der allgemeinen Strömungsrichtung entgegengesetzte Konvektionswirbel vor. Die Geschwindigkeit des Inertgases im Reaktor beträgt bei der Polymerisation beispielsweise 0,02 bis 1,5 m/s, bevorzugt 0,05 bis 0,4 m/s.

Das erfindungsgemäße Verfahren wird vorzugsweise in einem Reaktor durchgeführt, der am Kopf eine Vertropfereinheit aufweist. Hierbei handelt es sich um eine Platte mit mindestens einer Bohrung, wobei die Flüssigkeit von oben durch die Platte tritt. Die Vertropferplatte bzw. die Flüssigkeit wird in Schwingungen versetzt, wodurch an der Unterseite der Vertropferplatte eine monodisperse Tropfenkette erzeugt wird. Die Funktionsweise einer Vertropferplatte wird in US 5,269,980 in Spalte 3, Zeilen 37 bis 54, erläutert. Die wässrige Monomerlösung wird vorzugsweise mit Hilfe einer Vertropferplatte, die am Kopf des Reaktors angeordnet ist, vertropft.

Die Anzahl der Bohrungen wird gemäß der gewünschten Kapazität und Tropfengröße ausgewählt. Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind. Meistens sind die Bohrungen kreisförmig angeordnet in mehreren Reihen. Wenn man die Polymerisation mit Hilfe von UV-Bestrahlung initiiert, ordnet man die Bohrungen beispielsweise in Linien auf Lücke an.

Der Durchmesser der Bohrungen wird an die gewünschte Tropfengröße angepasst. Der Durchmesser der Bohrungen beträgt üblicherweise 50 bis 1000 µm, vorzugsweise mindestens 75 µm, besonders bevorzugt mindestens 100 µm, und üblicherweise bis zu 1.000 µm, vorzugsweise bis zu 600 µm, besonders bevorzugt bis zu 300 µm. Der Tropfendurchmesser ist von verschiedenen Faktoren abhängig. Er entspricht etwa dem doppelten Durchmesser der Bohrungen der Vertropferplatte. Der Polymerpartikeldurchmesser hängt außerdem sehr stark vom Feststoffgehalt der Monomerlösung ab.

Es kann vorteilhaft sein die Vertropferplatte auf eine Trägerplatte aufzulegen, wobei die Trägerplatte ebenfalls Bohrungen aufweist. Dabei weisen die Bohrungen der Trägerplatte einen größeren Durchmesser auf als die Bohrungen der Vertropferplatte auf und sind so angeordnet, dass sich unter jeder Bohrung der Vertropferplatte eine konzentrische Bohrung der Trägerplatte befindet. Diese Anordnung ermöglicht einen schnellen Wechsel der Vertropferplatte, beispielsweise um Tropfen einer anderen Größe zu erzeugen. Ein derartiges System aus Vertropferplatte und Trägerplatte gilt als Vertropferplatte im Sinne dieser Erfindung, d.h. die Unterseite des Systems Vertropferplatte/Trägerplatte ist die Unterseite der Vertropferplatte.

Der Kontaktwinkel ist ein Maß für das Benetzungsverhalten einer Flüssigkeit, insbesondere Wasser, gegenüber einer Oberfläche und kann mit üblichen Methoden bestimmt werden, beispielsweise gemäß ASTM D 5725. Ein niedriger Kontaktwinkel bedeutet eine gute und ein hoher Kontaktwinkel eine schlechte Benetzung. Der Kontaktwinkel der gesamten Unterseite der Vertropferplatte gegenüber der zu vertropfenden Flüssigkeit beträgt vorzugsweise mindestens 60°. Die Vertropferplatte kann aber auch vollständig aus einem Material bestehen, dass gegenüber der zu vertropfenden Flüssigkeit einen Kontaktwinkel von mindestens 60° aufweist. Der Kontaktwinkel gegenüber der zu vertropfenden Flüssigkeit beträgt vorzugsweise mindestens 70° und insbesondere mindestens 90°. Die zu vertropfenden wässrigen Monomerlösungen weisen die vorstehend genannten Kontaktwinkel auf.

Der Abstand der Bohrungen voneinander beträgt vorzugsweise von 1 bis 100 mm, besonders bevorzugt von 2 bis 50 mm, insbesondere 5 bis 20 mm. Die Dicke der Vertropferplatte wird so ausgewählt, dass die Vertropferplatte hinreichend mechanisch stabil ist aber gleichzeitig ausreichend schwingen kann. Sie beträgt vorzugsweise 0,1 bis 2 mm, besonders bevorzugt von 0,2 bis 1,5 mm, ganz besonders bevorzugt von 0,5 bis 1 mm, wobei eine mögliche Trägerplatte nicht berücksichtigt ist.

Es ist aber auch möglich, dass die Vertropferplatte aus einem Material mit einem niedrigeren Kontaktwinkel gegenüber der zu vertropfenden Flüssigkeit besteht, beispielsweise einem Stahl mit der Werkstoffnummer 1.4571, und mit einem Material mit einem größeren Kontaktwinkel gegenüber der zu vertropfenden Flüssigkeit beschichtet wird. Geeignete Beschichtungen sind beispielsweise fluorhaltige Polymere, wie Perfluoralkoxyethylen, Polytetrafluorethylen, Ethylen-Chlortrifluorethylen-Copolymere, Ethylen-Tetrafluorethylen-Copolymere und fluoriertes Polyethylen. Eine weitere Methode zur Kontaktwinkelerhöhung besteht darin, dass man eine Vertropferplatte aus beispielsweise Eisen chemisch vernickelt und Teflon einlagert. Infolge der schlechten Benetzbarkeit der Vertropferplatte werden monodisperse Tropfen mit enger Tropfengrößenverteilung erhalten.

Beim Versprühen der wässrigen Monomerlösung mit Hilfe üblicher Vorrichtungen wie einer Zweistoffdüse, erhält man ein Aerosol, das z. B. einen Teilchendurchmesser von 20 bis 200 µm, vorzugsweise 100 bis 200 µm hat, während die durch Vertropfen erhaltenen Tröpfchen der wässrigen Monomerlösung einen mittleren Teilchendurchmesser von 100 bis 2000 µm haben. Die Teilchengrößen sind gewichtsmittlere Teilchengrößen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429.

Die wässrige Monomerlösung enthält vorzugsweise N-Vinylformamid als alleiniges Monomer. Bei der Polymerisation entstehen dann Homopolymerisate von N-Vinylformamid in Form von Pulvern mit einem mittleren Teilchendurchmesser von beispielsweise 20 bis 1000 µm. Man kann jedoch nach dem erfindungsgemäßen Verfahren auch Copolymerisate herstellen. Hierfür geht man von einer wässrigen Monomerlösung aus, die mindestens 50 mol-% N-Vinylformamid und bis zu 50 mol-% mindestens eines anderen wasserlöslichen Monomeren enthält. Im vorliegenden Zusammenhang soll unter wasserlöslich verstanden werden, dass das Monomer eine Wasserlöslichkeit von >1 g/l (bei 25°C und 1013 mbar) aufweist.

Beispiele für wasserlösliche Monomere sind beispielsweise ethylenisch ungesättigte C₃- bis C₅-Carbonsäuren wie Acrylsäure, Methacrylsäure, Maleinsäure, Fumarsäure, Itaconsäure und Ethacrylsäure, Sulfogruppen enthaltende Monomere wie Vinylsulfonsäure, Styrolsulfonsäure, Allylsulfonsäure, Methallylsulfonsäure, 2-Acrylamido-2-methylpropansulfonsäure und Sulfoethylacrylat, Vinylphosphonsäure, Acrylamid, Methacrylamid, Hydroxyalkylacrylate und Hydroxyalkylmethacrylate wie Hydroxyethylacrylat, Hydroxyethylmethacrylat, Hydroxypropylacrylat, Hydroxypropylmethacrylat, Hydroxybutylacrylat und Hydroxybutylmethacrylat, basische Acrylate und basische Methacrylate wie Dimethylaminoethylacrylat, Dimethylaminoethylmethacrylat, Dimethylaminopropylacrylat, Dimethylaminopropylmethacrylat, Diethylaminoethylacrylat und Diethylaminoethylmethacrylat, basische (Meth)Acrylamide wie Dimethylaminoethylacrylamid, Dimethylaminoethylmethacrylamid, Diethylaminoethylacrylamid, Diethylaminoethylmethacrylamid, Dimethylaminopropylacrylamid und Dimethylaminopropylmethacrylamid, N-Vinylpyridin, N-Vinylimidazol, 2-Methylvinylimidazol und N-Vinylcaprolactam.

Die Säuregruppen enthaltenden Monomeren können in Form der freien Säuregruppen sowie in partiell oder in vollständig mit Basen neutralisierter Form bei der Polymerisation eingesetzt werden. Als Basen kommen beispielsweise Alkalimetall-, Erdalkalimetall- und Ammoniumbasen in Betracht. Vorzugsweise verwendet man Natronlauge, Kalilauge, Ammoniak, Ethanolamin oder Triethanolamin als Neutralisationsmittel.

Die basischen Monomeren können als freie Base, in partiell oder vollständig mit Säuren neutralisierter Form oder in partiell oder vollständig quaternierter Form bei der Polymerisation eingesetzt werden. Beispiele für Säuren sind Mineralsäuren wie Salzsäure, Schwefelsäure oder Phosphorsäure sowie organische Säuren wie Ameisensäure, Essigsäure, Propionsäure, Benzolsulfonsäure oder Toluolsulfonsäure. Als Quaternierungsmittel kommen beispielsweise Alkylhalogenide wie Methylchlorid, Ethylchlorid, Hexylchlorid oder Benzylchlorid, Dimethylsulfat oder Diethylsulfat in Betracht.

Weitere Beispiele für wasserlösliche Monomere sind Methylacrylat, Methylmethacrylat, Ethylmethacrylat, Vinylacetat, Vinylpropionat und Styrol.

Die wasserlöslichen Monomeren werden z.B. in Mengen von 0 bis 50 mol-%, vorzugsweise 0,5 bis 30 und insbesondere 1 bis 20 mol-% bei der Polymerisation mit N-Vinylformamid eingesetzt.

Außer mindestens einem wasserlöslichen Monomeren kann man gegebenenfalls noch zusätzlich mindestens ein wasserunlösliches Monomer bei der Polymerisation von N-Vinylformamid einsetzen oder N-Vinylformamid zusammen mit mindestens einem wasserunlöslichen Monomeren polymerisieren. Unter wasserunlöslich soll verstanden werden, dass das Monomer eine Wasserlöslichkeit von <1 g/l (bei 25°C und 1013 mbar) aufweist. Beispiele für wasserunlösliche Monomere sind Laurylacrylat, Laurylmethacrylat, Palmitylacrylat, Palmitylmethacrylat, Stearylacrylat und Stearylmethacrylat. Die wasserunlöslichen Monomeren werden bei der Polymerisation beispielsweise in einer Menge von 0 bis 20, meistens 0,1 bis 10 mol-% eingesetzt. Die jeweils verwendete Menge an wasserunlöslichen Monomeren richtet sich nach der Löslichkeit der wasserunlöslichen Monomeren in der wässrigen Monomerlösung. Die Löslichkeit der wasserunlöslichen Monomeren in der wässrigen Monomerlösung unterscheidet sich von der Löslichkeit in Wasser. Meistens ist sie in der Monomerlösung höher als in Wasser. Die wasserunlöslichen Monomeren sollen in der wässrigen Monomerlösung löslich sein.

Die wässrige Monomerlösung kann gegebenenfalls noch zusätzlich zu den obengenannten Monomeren mindestens einen Vernetzer enthalten oder als Monomere N-Vinylformamid und mindestens einen Vernetzer. Die Vernetzer sind Verbindungen mit mindestens zwei polymerisierbaren Gruppen, die in das Polymernetzwerk radikalisch einpolymerisiert werden können. Geeignete Vernetzer sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A 0 530 438 beschrieben, Di- und Triacrylate, wie in EP-A 0 547 847, EP-A 0 559 476, EP-A 0 632 068, WO 93/21237, WO 03/104299, WO 03/104300, WO 03/104301 und in DE-A 103 31 450 beschrieben, gemischte Acrylate, die neben Acrylatgruppen weitere ethylenisch ungesättigte Gruppen enthalten, wie in DE-A 103 314 56 und der älteren deutschen Anmeldung mit dem Aktenzeichen 103 55 401.7 beschrieben, oder Vernetzermischungen wie beispielsweise in DE-A 195 43 368, DE-A 196 46 484, WO 90/15830 und WO 02/32962 beschrieben.

Geeignete Vernetzer sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A 0 343 427 beschrieben sind. Weiterhin geeignete Vernetzer sind Di-, Tri- und Tetraallylether von Pentaerythrit, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer sind jedoch Di- und Triacrylate des 3- bis 15-fach ethoxylierten Glyzerins, des 3- bis 15-fach ethoxylierten Trimethylolpropans, des 3- bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des 40-fach ethoxylierten Glyzerins, Trimethylolethans oder Trimethylolpropans.

Ganz besonders bevorzugte Vernetzer sind die mit Acrylsäure oder Methacrylsäure zu Di- oder Triacrylaten veresterten mehrfach ethoxylierten und/oder propoxylierten propoxylierten Glyzerine wie sie beispielsweise in WO 03/104301 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins. Diese zeichnen sich durch besonders niedrige Restgehalte (typischerweise unter 10 Gew.-ppm) im Polymer aus.

Die Menge an Vernetzer beträgt, sofern er bei der Polymerisation eingesetzt wird, vorzugsweise mindestens 0,001 mol-%, insbesondere mindestens 0,01 mol-%, ganz besonders bevorzugt mindestens 0,1 mol-%, und vorzugsweise bis zu 10 mol-%, insbesondere bis zu 5 mol-%, ganz besonders bevorzugt bis zu 2 mol-%, jeweils bezogen auf die bei der Polymerisation insgesamt eingesetzten Monomeren.

Die Konzentration der Monomeren in der wässrigen Monomerlösung beträgt beispielsweise 1 bis 80 Gew.-%, vorzugsweise 5 bis 70 Gew.-% und liegt meisten in dem Bereich von 10 bis 60 Gew.-%. In einer bevorzugten Ausführungsform des erfindungsgemäßen Verfahrens stellt man den pH-Wert der wässrigen Monomerlösung mit Hilfe eines Phosphatpuffers auf einen pH-Wert in dem Bereich von 5 bis 7 ein.

Die Monomeren werden in Gegenwart von Initiatoren polymerisiert. Die Initiatoren werden vorzugsweise der Monomerlösung zugesetzt, insbesondere kurz vor dem Versprühen oder dem Vertropfen der Monomerlösung. Wenn man einen Initiator zur Monomerlösung zusetzt sollte darauf geachtet werden, dass die Temperatur der Monomerlösung unterhalb von 30°C, insbesondere unterhalb von 20°C liegt. Wenn man Initiatoren einsetzt, die die Polymerisation schon bei einer Temperatur von beispielsweise 35°C starten, empfiehlt es sich, die Monomerlösung auf eine Temperatur von unterhalb 10°C, beispielsweise auf 0 bis 10°C abzukühlen und mit Hilfe einer sorgfältigen Temperaturkontrolle der wässrigen Monomerlösung dafür zu sorgen, dass keine vorzeitige Polymerisation eintritt.

Die Initiatoren werden in üblichen Mengen eingesetzt, beispielsweise in Mengen von 0,001 bis 5 Gew.-%, vorzugsweise 0,01 bis 1 Gew.-%, bezogen auf die zu polymerisierenden Monomeren.

Als Initiatoren können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten RedoxInitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Als Redoxinitiatoren eignen sich beispielsweise Kombinationen aus einer oxidierenden Komponente wie tert.-Butylperoxid, Di-tert.-Butylperoxid, tert.-Butylhydroperoxid oder Wasserstoffperoxid und einer reduzierenden Komponente wie Ascorbinsäure, Natriummethylsulfinat, Natriumbisulfit und/oder Eisen-(II)-salze wie Eisen-(II)-ammoniumsulfat. Beispiele für Azostarter sind Azobisisobutyronitril, 2,2'-Azobis(2,4-dimethylnitril), 2,2'-Azobis-(N,N'-dimethylenisobutyramidin)-dihydrochlorid, 2,2'-Azobis-(2-amidinopropan)-dihydrochlorid, 2,2'-Azobis-(N,N'-dimethylenisobutyranilin), 4,4'-Azobis-(4-cyanopentancarbonsäure) und 2-Carbamoylazoisobutyronitril.

Um die Eigenschaften der Polymerisate zu modifizieren, kann die wässrige Monomerlösung zusätzlich einen Polymerisationsregler enthalten. Beispiele für Polymerisationsregler sind organische Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff, Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation einen Regler einsetzt, so beträgt die jeweils verwendete Menge beispielsweise 0,01 bis 5, vorzugsweise 0,1 bis 1 Gew.-%, bezogen auf die bei der Polymerisation eingesetzten Monomeren. Polymerisationsregler und Vernetzer können bei der Polymerisation gemeinsam eingesetzt werden.

Die Temperatur im Reaktionsraum beträgt vorzugsweise 70 bis 250°C, besonders bevorzugt 100 bis 190°C, ganz besonders bevorzugt 110 bis 150°C. Die Polymerisation kann unter erhöhtem Druck z.B. bei Drücken bis zu 20 bar, oder unter vermindertem Druck von bis zu 50 mbar durchgeführt werden. Der Einfachheit halber wird vorzugsweise bei dem jeweiligen Atmosphärendruck polymerisiert.

Die Polymerisationsgeschwindigkeit und die Trockengeschwindigkeit weisen üblicherweise unterschiedliche Temperaturabhängigkeiten auf. Dies kann beispielsweise bedeuten, dass die versprühten Tropfen trocknen bevor der gewünschte Umsatz erreicht worden ist. Daher ist es vorteilhaft die Reaktionsgeschwindigkeit und die Trockengeschwindigkeit getrennt zu beeinflussen.

Die Trockengeschwindigkeit kann über die relative Feuchte des Inertgases beeinflusst werden. Die relative Feuchte des Inertgases beträgt im allgemeinen weniger als 90%, vorzugsweise weniger als 60%, besonders bevorzugt weniger als 30%. Dabei ist die relative Feuchte der Quotient aus Wasserdampfpartialdruck und maximalem Wasserdampfpartialdruck (Sättigung) bei einer gegebenen Temperatur multipliziert mit 100%.

Die Polymeriationsgeschwindigkeit kann durch Art und Menge des verwendeten Initiatorsystems eingestellt werden. Das Trägergas wird zweckmäßigerweise außerhalb des Reaktors bis auf eine Temperatur von 300°C, vorzugsweise auf die Reaktionstemperatur von 70 bis 250°C, meistens 100 bis 190°C und insbesondere 110 bis 150°C, vorgewärmt. Vorteilhaft zur Steuerung der Polymerisationsgeschwindigkeit ist die Verwendung von Azoverbindungen oder Redoxinitiatoren als Initiatoren. Das Anspringverhalten der Polymerisation lässt sich mit Azoverbindungen oder Redoxinitiatoren über Auswahl des Initiators, Initiatorkonzentration und Reaktionstemperatur besser steuern als beispielsweise mit reinen Peroxidinitiatoren.

Besonders vorteilhaft sind Photoinitiatoren. Bei Verwendung von Photoinitiatoren, die ebenfalls der wässrigen Monomerlösung zugesetzt werden, kann die Trockengeschwindigkeit über die Temperatur auf den gewünschten Wert eingestellt werden, ohne dass damit gleichzeitig die Radikalbildung wesentlich beeinflusst wird. Die Photopolymerisation wird vorteilhaft mit Hilfe von UV-Lampen gestartet, die im oberen Bereich des Reaktors in der Nähe der Vertropferplatte angeordnet sind.

Das Reaktionsabgas, d.h. das der Reaktionsraum verlassende Trägergas, kann beispielsweise in einem Wärmeaustauscher abgekühlt werden. Geeignete Wärmeaustauscher sind direkte Wärmeaustauscher, wie Wäscher, und indirekte Wärmeaustauscher, wie Kondensatoren. Dabei kondensieren Wasser und nicht umgesetztes Monomer. Danach kann das Reaktionsabgas zumindest teilweise wieder aufgewärmt und als Kreisgas in den Reaktor zurückgeführt werden. Vorzugsweise wird das Kreisgas so abgekühlt, dass das abgekühlte Kreisgas den für die Reaktion gewünschten Anteil an Wasserdampf hat. Ein Teil des Reaktionsabgases kann ausgeschleust und durch frisches Trägergas ersetzt werden, wobei im Reaktionsabgas enthaltene nicht umgesetzte Monomere abgetrennt und rückgeführt werden können. Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei vorzugsweise so eingestellt, dass die Wandtemperatur mindestens 5°C oberhalb der Reaktorinnentemperatur liegt und eine Kondensation an den Reaktorwänden zuverlässig vermieden wird.

Die erhaltenen Polymerpartikel können anschließend getrocknet und/oder einer Nachpolymerisation zur Entfernung von restlichen Monomeren oder einer Nachvernetzung unterworfen werden. Die mittlere Teilchengröße der N-Vinylformamid-Einheiten enthaltenden Polymeren beträgt beispielweise 100 bis 1000 µm, vorzugsweise 300 bis 700 µm. Falls gewünscht, kann man das pulverförmige Polymere am Anschluss an die Herstellung in einer Wirbelschicht agglomerieren.

Die nach dem erfindungsgemäßen Verfahren erhältlichen N-Vinylformamideinheiten aufweisenden Polymeren können nach den bekannten Methoden des Standes der Technik in einer polymeranalogen Reaktion durch Abspaltung von Formylgruppen aus den einpolymerisierten Vinylformamideinheiten unter Bildung von Vinylamineinheiten modifiziert werden. Beispielsweise kann man auf pulverförmige, N-Vinylformamid-Einheiten enthaltende Polymere, die einen Wassergehalt von höchstens 5 Gew.-% haben, gasförmigen Chlorwasserstoff einwirken lassen (vgl. US 4,623,699) oder Suspensionen von solchen Polymeren, die einen Wassergehalt von mindestens 6 bis 90 Gew.-% haben, mit Hilfe von Säuren oder Basen hydrolysieren (vgl. DE-A 40 07 311). Die Hydrolyse erfolgt beispielsweise in dem Temperaturbereich von 30 bis 150°C. Je nach Hydrolysebedingung erhält man Polymere, deren N-Vinylformamid-Einheiten zu 1 bis nahezu 100%, meistens 5 bis 95% in Vinylamin-Einheiten umgewandelt sind.

Die Vinylformamid-Einheiten enthaltenden Polymeren und die daraus durch Abspaltung von Formylgruppen erhältlichen Vinylamin-Einheiten enthaltenden Polymeren werden beispielsweise bei der Herstellung von Papier dem Papierstoff zugesetzt. So wirken hochmolekulare Vinylformamid-Einheiten und Vinylamin-Einheiten enthaltende Polymere mit einer Molmasse von mehr als 1 Million bei der Papierherstellung als Flockungs-, Entwässerungs- und Retentionsmittel. Polymere mit Molmassen von mehr als 100 000 bis zu 1 Million werden als Verfestiger für Papier eingesetzt, während niedrigmolekulare Polymere, insbesondere Vinylamin-Einheiten enthaltende Polymere, Fixiermittel für Störstoffe sind und insbesondere bei der Herstellung von Papieren aus Altpapier eingesetzt werden.

Die Prozentangaben in den Beispielen sind Gewichtsprozent. Der K-Wert der Polymeren wurde nach H. Fikentscher, Cellulose-Chemie, Band 13, 58 bis 64 und 71 bis 74 (1932) bei einer Polymerkonzentration von 2 Gew.-% in vollständig entsalztem Wasser bei einer Temperatur von 25°C gemessen.

### Beispiel 1

Als Reaktor verwendete man einen beheizbaren Sprühturm, der einen kreisförmigen Querschnitt mit einem Durchmesser von 2 m und eine Höhe von 15 m hatte. Am Kopf des Reaktors war eine Vertropferplatte angeordnet, die 30 Bohrungen mit einem Durchmesser von 200 µm aufwies. Der Reaktor wurde mit Stickstoff inertisiert und auf eine Innentemperatur von 150°C erhitzt. Im oberen Abschnitt des Reaktors wurde Stickstoff mit einer Gasgeschwindigkeit von 0,1 m/s und einer Temperatur von 150°C eingeleitet. Im Gleichstrom mit dem Stickstoffstrom wurde mit Hilfe der oben beschriebenen Vertropferplatte eine wässrige Monomerlösung vertropft, die durch Mischen von 3500 g Wasser, 23 g 75%iger Phosphorsäure, 34 g 25%iger wässriger Natronlauge, 2000 g N-Vinylformamid (99%ig) und 10 g (Azostarter V44) 2,2'-Azobis[2-(2-imidazolin-2-yl)propan] dihydrochlorid hergestellt wurde. Pro Stunde wurden 10 kg der wässrigen Monomerlösung vertropft und polymerisiert. Die Polymerisation des N-Vinylformamids erfolgte in den einzelnen Tröpfchen der Monomerlösung bei einer Gas-Temperatur von 150°C. Am Boden des Reaktors wurde ein weißes Polymerpulver ausgetragen, das eine Restfeuchte von 12% und eine mittlere Teilchengröße von 390 µm hatte. Das Polymer hatte einen K-Wert von 30.

### Beispiel 2

Beispiel 1 wurde mit der Ausnahme wiederholt, dass man die wässrige Monomerlösung durch Düsen mit einer Bohrung von 0,4 mm versprühte. Man erhielt ein weißes Pulver, das eine Restfeuchte von 9% und eine durchschnittliche Teilchengröße von 90 µm hatte. Der K-Wert des Polymeren betrug 20.

### Beispiel 3

Beispiel 1 wurde mit der einzigen Ausnahme wiederholt, dass man eine wässrige Monomerlösung vertropfte, die anstelle von 10 g des Azostarters jetzt nur 2 g enthielt. Man erhielt ein weißes Pulver, das eine Restfeuchte von 9% und eine durchschnittliche Teilchengröße von 400 µm hatte. Der K-Wert des Polymeren betrug 70.

## Patentansprüche

1. Verfahren zur Herstellung von Vinylformamid-Einheiten enthaltenden Polymerpulvern durch radikalische Polymerisation einer wässrigen Lösung von N-Vinylformamid und gegebenenfalls anderen Monomeren und Trocknen der Polymeren, **dadurch gekennzeichnet, dass** man eine wässrige Monomerlösung, die N-Vinylformamid und mindestens einen Polymerisationsinitiator enthält, am Kopf eines beheizbaren, turmförmigen Reaktors zu einem Aerosol versprüht oder vertropft, dann das Aerosol bzw. die Tröpfchen in einer Inertgasatmosphäre zu einem feinteiligen Feststoff polymerisiert und das feinteilige Polymere aus dem Reaktor austrägt.

2. Verfahren nach Anspruch 1, **dadurch gekennzeichnet, dass** dem Reaktor im oberen Drittel ein Inertgasstrom zugeführt wird, der eine Temperatur von mindestens 100°C hat.

3. Verfahren nach Anspruch 1 oder 2, **dadurch gekennzeichnet, dass** die Temperatur des Inertgasstroms 120 bis 300°C beträgt.

4. Verfahren nach einem der Ansprüche 1 bis 3, **dadurch gekennzeichnet, dass** die wässrige Monomerlösung mit Hilfe einer Vertropferplatte, die am Kopf des Reaktors angeordnet ist, vertropft wird.

5. Verfahren nach Anspruch 4, **dadurch gekennzeichnet, dass** die Vertropferplatte Bohrungen mit einem Durchmesser von 50 bis 1000 µm aufweist.

6. Verfahren nach Anspruch 4 oder 5, **dadurch gekennzeichnet, dass** die Vertropferplatte mit einem fluorhaltigen Polymer beschichtet ist oder daraus besteht.

7. Verfahren nach einem der Ansprüche 1 bis 6, **dadurch gekennzeichnet, dass** die Tröpfchen des durch Versprühen der wässrigen Monomerlösung gebildeten Aerosols einen Teilchendurchmesser von 20 bis 200 µm haben.

8. Verfahren nach einem der Ansprüche 1 bis 6, **dadurch gekennzeichnet, dass** die durch Vertropfen erhaltenen Tröpfchen der wässrigen Monomerlösung einen mittleren Teilchendurchmesser von 100 bis 2000 µm haben.

9. Verfahren nach einem der Ansprüche 1 bis 8, **dadurch gekennzeichnet, dass** die wässrige Monomerlösung N-Vinylformamid als alleiniges Monomer enthält.

10. Verfahren nach einem der Ansprüche 1 bis 8, **dadurch gekennzeichnet, dass** die wässrige Monomerlösung mindestens 50 mol-% N-Vinylformamid und bis zu 50 mol-% mindestens eines anderen wasserlöslichen Monomeren enthält.

11. Verfahren nach einem der Ansprüche 1 bis 10, **dadurch gekennzeichnet, dass** die wässrige Monomerlösung 0,001 bis 10 mol-% mindestens eines Vernetzers mit mindestens zwei Doppelbindungen im Molekül enthält.

12. Verfahren nach einem der Ansprüche 1 bis 11, **dadurch gekennzeichnet, dass** die wässrige Monomerlösung mit Hilfe eines Phosphatpuffers auf einen pH-Wert in dem Bereich von 5 bis 7 eingestellt ist.

13. Verfahren nach einem der Ansprüche 1 bis 12, **dadurch gekennzeichnet, dass** die wässrige Monomerlösung zusätzlich einen Polymerisationsregler enthält.

14. Verfahren nach einem der Ansprüche 1 bis 13, **dadurch gekennzeichnet, dass** das pulverförmige Polymere anschließend in einer Wirbelschicht agglomeriert wird.

## Claims

1. A process for producing a polymer powder comprising vinylformamide units by free radical polymerization of an aqueous solution of N-vinylformamide and if appropriate other monomers and drying the polymer, which comprises an aqueous monomer solution comprising N-vinylformamide and at least one polymerization initiator being spray dispensed as an aerosol or dropletized at the top of a heatable tower-shaped reactor, then polymerizing the aerosol or droplets in an inert gas atmosphere to form a finely divided solid and discharging the finely divided polymer from the reactor.

2. The process according to claim 1 wherein the reactor is fed in its upper third with an inert gas stream having a temperature of at least 100°C.

3. The process according to claim 1 or 2 wherein the temperature of the inert gas stream is in the range from 120 to 300°C.

4. The process according to any one of claims 1 to 3 wherein the aqueous monomer solution is dropletized by means of a dropletizer plate disposed at the top of the reactor.

5. The process according to claim 4 wherein the dropletizer plate has drilled holes having a diameter in the range from 50 to 1000 µm.

6. The process according to claim 4 or 5 wherein the dropletizer plate is coated with or consists of a fluorous polymer.

7. The process according to any one of claims 1 to 6 wherein the droplets of the aerosol formed by spray dispensing the aqueous monomer solution have a particle diameter in the range from 20 to 200 µm.

8. The process according to any one of claims 1 to 6 wherein the droplets of the aqueous monomer solution which are formed by dropletization have an average particle diameter in the range from 100 to 2000 µm.

9. The process according to any one of claims 1 to 8 wherein the aqueous monomer solution comprises N-vinylformamide as sole monomer.

10. The process according to any one of claims 1 to 8 wherein the aqueous monomer solution comprises at least 50 mol% of N-vinylformamide and up to 50 mol% of at least one other water-soluble monomer.

11. The process according to any one of claims 1 to 10 wherein the aqueous monomer solution comprises 0.001 to 10 mol% of at least one crosslinker having at least two double bonds in the molecule.

12. The process according to any one of claims 1 to 11 wherein the aqueous monomer solution is adjusted with a phosphate buffer to a pH in the range from 5 to 7.

13. The process according to any one of claims 1 to 12 wherein the aqueous monomer solution further comprises a polymerization regulator.

14. The process according to any one of claims 1 to 13 wherein the pulverulent polymer is subsequently agglomerated in a fluidized bed.

## Revendications

1. Procédé pour la préparation de poudres polymères contenant des unités vinylformamide par polymérisation radicalaire d'une solution aqueuse de N-vinylformamide et le cas échéant d'autres monomères et séchage des polymères, **caractérisé en ce qu'**on pulvérise en aérosol ou on transforme en gouttes une solution aqueuse de monomères, qui contient du N-vinylformàmide et au moins un initiateur de polymérisation, en tête d'un réacteur pouvant être chauffé, en forme de tour, puis on polymérise l'aérosol ou les gouttes dans une atmosphère de gaz inerte en un solide finement divisé et on évacue le polymère finement divisé du réacteur.

2. Procédé selon la revendication 1, **caractérisé en ce qu'**on introduit un flux de gaz inerte qui présente une température d'au moins 100°C dans le tiers supérieur du réacteur.

3. Procédé selon la revendication 1 ou 2, **caractérisé en ce que** la température du flux de gaz inerte est de 120 à 300°C.

4. Procédé selon l'une quelconque des revendications 1 à 3, **caractérisé en ce que** la solution aqueuse de monomères est transformée en gouttes à l'aide d'une plaque de formation de gouttes qui est disposée en tête du réacteur.

5. Procédé selon la revendication 4, **caractérisé en ce que** la plaque de formation de gouttes présente des trous d'un diamètre de 50 à 1000 µm.

6. Procédé selon la revendication 4 ou 5, **caractérisé en ce que** la plaque de formation de gouttes est revêtue ou constituée par un polymère fluoré.

7. Procédé selon l'une quelconque des revendications 1 à 6, **caractérisé en ce que** les gouttes de l'aérosol formé par la pulvérisation de la solution aqueuse de monomères présentent un diamètre de particule de 20 à 200 µm.

8. Procédé selon l'une quelconque des revendications 1 à 6, **caractérisé en ce que** les gouttes obtenues par la formation de gouttes de la solution aqueuse de monomères présentent un diamètre de particule moyen de 100 à 2000 µm.

9. Procédé selon l'une quelconque des revendications 1 à 8, **caractérisé en ce que** la solution aqueuse de monomères contient du N-vinylformamide comme monomère unique.

10. Procédé selon l'une quelconque des revendications 1 à 8, **caractérisé en ce que** la solution aqueuse de monomères contient au moins 50% en mole de N-vinylformamide et jusqu'à 50% en mole d'au moins un autre monomère soluble dans l'eau.

11. Procédé selon l'une quelconque des revendications 1 à 10, **caractérisé en ce que** la solution aqueuse de monomères contient 0,001 à 10% en mole d'au moins un réticulant présentant au moins deux doubles liaisons dans la molécule.

12. Procédé selon l'une quelconque des revendications 1 à 11, **caractérisé en ce que** la solution aqueuse de monomères est réglée à un pH dans la plage de 5 à 7 à l'aide d'un tampon phosphate.

13. Procédé selon l'une quelconque des revendications 1 à 12, **caractérisé en ce que** la solution aqueuse de monomères contient en outre un agent de régulation de la polymérisation.

14. Procédé selon l'une quelconque des revendications 1 à 13, **caractérisé en ce que** le polymère poudreux est ensuite aggloméré dans un lit tourbillonnant.
